# EUROPÄISCHE PATENTANMELDUNG

(11) **EP 1 028 163 A1**
(43) Veröffentlichungstag der Anmeldung: **16.08.2000**
(21) Anmeldenummer: 99810110.9
(22) Anmeldetag: 10.02.1999
(51) Int. Cl.: C12H 1/06, A23L 2/74, B01D 61/14, B01D 61/22

(54) **Verfahren und Vorrichtung zur Crossflow-Mikrofiltration einer Flüssigkeit**

(71) Anmelder: Filtrox AG, 9000 St. Gallen (CH)
(72) Erfinder: Gans, Ulrich, 9032 Engelburg (CH)
(74) Vertreter: Hepp, Dieter

(57) **Zusammenfassung**

In einem Verfahren zur Crossflow-Mikrofiltration einer Flüssigkeit, insbesondere Bier wird die unfiltrierte Flüssigkeit gleichzeitig in Serie oder parallel durch eine Zentrifuge (10) und durch wenigstens ein Filtermodul (1) einer Cross-flow-Mikrofiltrationsanlage geführt. Durch die Zentrifugation wird der Wert der Konzentration der Trubstoffe im Kreislauf kontinuierlich herabgesetzt und Trubstoffe werden in der Zentrifuge ausgeschieden. Ein Betrieb mit Konzentrationswerten, die in einem vorbestimmbaren Bereich liegen ist trotz Veränderung der Konzentrationen in der zu filtrierenden Flüssigkeit möglich.

## Beschreibung

Die Erfindung betrifft ein Verfahren und eine Vorrichtung zur Crossflow-Mikrofiltration einer Flüssigkeit, insbesondere von Getränken z.B. Bier, mit den Merkmalen des Oberbegriffs der unabhängigen Patentansprüche.

Durch die Filtration des Getränks sollen Hefe und andere Trubstoffe sowie kolloidal gelöste Stoffe wie beispielsweise Eiweisse entfernt werden, um dem Getränk ein blankes, glanzfreies Aussehen zu geben und um die chemisch-physikalische sowie biologische Haltbarkeit zu erhöhen.

Neben der häufig verwendeten Kieselgur-Filtration werden heute nur selten andere Filtrationsverfahren eingesetzt. Ein solches Verfahren ist beispielsweise die Querstrom- oder Crossflow-Mikrofiltration. Bei dieser Methode wird das ungeklärte oder auch vorgeklärte Getränk in einem Filtermodul über eine poröse Membran geführt. Dabei stellt sich zwischen dieser Unfiltratseite und der der Unfiltratseite gegenüberliegenden Filtratseite der Membran ein transmembraner Druck ein. Dadurch durchströmt ein Teil der die Membran überströmenden Flüssigkeit diese quer und kann als gereinigtes Filtrat auf der Filtratseite gesammelt werden.

Ein solches Filtrationsverfahren ist beispielsweise in der WO 95/20038 gezeigt.

Ein Problem bei dem Crossflow-Mikrofiltationsverfahren besteht darin, dass sich während der Filtration auf der Membranoberfläche auf der Unfiltratseite die auszufilternden Inhaltsstoffe teilweise als Deckschicht absetzen. Damit die Durchströmung der Membran sichergestellt ist, darf diese Deckschicht nicht zu kompakt werden.

Es ist deshalb bekannt, die Membran periodisch rückzuspülen um die Deckschicht zu entfernen. Ausserdem ist es bekannt Klärung oder Vorklärung des Getränks durch Zentrifugation durchzuführen.

Ein erstes Problem bei diesen bekannten Verfahren besteht darin, dass die Filtration für die Rückspülung zeitweise unterbrochen werden. Dadurch nimmt die Produktivität ab. Ein zweites Problem besteht darin, dass bei grossen Trubstoffkonzentrationen sich dies nachteilig auf die Produktivität, d.h. den Filtratmengenstrom unter sonst gleichen Bedingungen auswirkt.

Ein weiteres Problem besteht darin, dass die Trubstoffkonzentration in der Flüssigkeit hohen Schwankungen unterliegen kann. Beispielsweise Bier, welches aus natürlichen Rohstoffen hergestellt wird, kann im unfiltrierten Zustand Hefekonzentrationen von 10⁴ bis 10⁹ Hefezellen pro ml aufweisen. Je nach Konzentration der Trubstoffe in der Flüssigkeit sind die strömungsmechanischen Eigenschaften des Getränks unterschiedlich. Insbesondere steigt die Viskosität mit steigendem Trubstoffgehalt. Zusätzlich tritt mit steigendem Trubstoffgehalt zunehmend strukturviskoses Verhalten auf. Betrachtet man die mit dem Bau einer Anlage fixierten Randbedingungen (insbesondere den max. Unfiltratdruck und die Sicherstellung minimaler Überströmung der Membran auf der Unfiltratseite) und die Erfordernisse des Betriebs (d.h. Betrieb mit möglichst geringen Drücken und geringen Überstromgeschwindigkeiten auf der Unfiltratseite) so wird deutlich, dass die Anlage möglichst lange bzw. möglichst mit niedrigem Trubstoffgehalt betrieben werden soll. Steigt der Trubstoffgehalt an ist mit sinkender Produktivität zu rechnen. Dies kann durch hohen Trubstoffgehalt im Unfiltrat, aber auch durch die Anreicherung der Trubstoffe auf der Unfiltratseite der Membran, insbesondere durch den Betrieb der Anlage hervorgerufen werden. Man beachte, dass zeitgleich laufend Filtrat abgeführt wird.

Es ist deshalb eine Aufgabe der vorliegenden Erfindung die Nachteile des Bekannten zu vermeiden, insbesondere also ein Verfahren und eine Vorrichtung zur Crossflow-Mikrofiltration einer Flüssigkeit zu schaffen, welche eine wirtschaftliche Filtration erlauben, welche das Problem einer frühzeitigen Bildung einer Deckschicht auf der Membran zuverlässig vermeiden und welche auf einfache Weise durchführbar bzw. herstellbar sind.

Erfindungsgemäss werden diese Aufgaben mit einem Verfahren und einer Vorrichtung gemäss dem kennzeichnenden Teil der unabhängigen Patentansprüche gelöst.

In der allgemeinsten Form besteht die vorliegende Erfindung darin, dass die Konzentration an Trubstoffen im Unfiltrat vor der Einleitung in das oder die Filtermodule einer Crossflow-Mikrofiltrationsanlage innerhalb von vorbestimmbaren Grenzen gehalten wird.

Dazu wird vorzugsweise wenigstens ein Teil des Unfiltrats wenigstens zeitweise gleichzeitig zu der Crossflow-Membranfiltration zentrifugiert. Damit kann in der Zentrifuge während der Crossflow-Mikrofiltration (CMF) die Konzentration an Trubstoffen im Unfiltrat jederzeit auf das gewünschte Mass eingestellt werden. Diese Zielgrösse kann z.B. durch den Grad der Trübung mit einem Photometer messtechnisch erfasst werden.

Wie im üblichen Crossflow-Mikrofiltrationsverfahren wird der die Membran quer durchströmende Teil der Flüssigkeit auf der Filtratseite der Membran als Filtrat gesammelt und der unfiltrierte Rest der Flüssigkeit wird als Retentat in einem Kreislauf dem Unfiltratstrom wieder zugeführt.

Wenigstens ein Teil des Unfiltratstroms wird wenigstens zeitweise zusätzlich in eine Zentrifuge geführt, darin zentrifugiert und dem Unfiltratstrom im Kreislauf wieder zugeführt. Die durch die Zentrifuge separierte Feststoff-Suspension wird abgeleitet.

In einem ersten Aspekt der Erfindung wird der Unfiltratstrom vor dem Eintritt in das Filtermodul in einen ersten Teilstrom und in einen zweiten Teilstrom aufgeteilt. CMF-Anlagen weisen üblicherweise eine Vielzahl solcher Module auf. Hier und im Folgenden wird der Einfachheit halber jeweils von einem Modul gesprochen, wobei mehrere Module jeweils mitumfasst werden. Der erste Teilstrom wird im Kreislauf durch das Filtermodul geführt und der zweite Teilstrom wird im Kreislauf durch die Zentrifuge geführt. Das aus dem Filtermodul austretende Retentat und das aus der Zentrifuge austretende Teilfiltrat werden zusammengeführt und erneut im Kreislauf filtriert bzw. zentrifugiert.

Durch die parallele Zentrifugation wird im Kreislauf die Konzentration der Trübstoffe herabgesetzt, während gleichzeitig die eigentliche Filtration im Filtermodul stattfindet, dort wird die Konzentration der Trubstoffe laufend erhöht. In der Summe bleibt die Konzentration der Trubstoffe im Kreislauf innerhalb von vorbestimmten Grenzen.

In einem bevorzugten Ausführungsbeispiel wird das Unfiltrat zuerst in einen Arbeitstank geführt. Das Retentat aus der Membranfilteranlage und das aus der Zentrifuge austretende Teilfiltrat werden ebenfalls in den Arbeitstank geleitet.

Die Art der Kombination einer Filtration und einer Zentrifugation ermöglicht insbesondere in Kombination mit einem Arbeitstank eine flexible Anpassung an wechselnde Konzentrationen der Trübstoffe im zugeführten Unfiltrat. Eine restlose Verarbeitung der Flüssigkeitsmengen mit geringem Energieeintrag ist damit möglich. Der Arbeitstank ermöglicht es, insbesondere auf schnelle Änderungen in den Konzentrationen in der zu filtrierenden Flüssigkeit zu reagieren. Durch eine Mischfunktion wird eine Pufferwirkung erreicht. Ausserdem ist es möglich, Druckstösse aufzufangen.

Das erfindungsgemässe Verfahren ermöglicht es insbesondere, eine gemeinsame Automatisierungseinrichtung für die Zentrifuge und für das Filtermodul zu verwenden. Vorteilhaft wird der Fluss der beiden Teilströme in Abhängigkeit der Konzentration der Trubstoffe im Unfiltrat eingestellt.

Die Konzentration der Trubstoffe im Unfiltrat kann dabei im Ablauf des Arbeitstanks gemessen werden. Sobald die Konzentration einen ersten vorbestimmbaren Grenzwert übersteigt, wird der zweite Teilstrom eingeschaltet. Dies bedeutet, dass bei Übersteigen eines ersten Grenzwertes die Zentrifugation eingesetzt wird, um die Trubstoffkonzentration zu senken.

Wenn der Wert der Trubstoffkonzentration im Unfiltratraum einen vorbestimmbaren zweiten Grenzwert übersteigt, ist es ausserdem denkbar, den ersten Teilstrom auszuschalten. Dies heisst, dass die Crossflow-Mikrofiltration zeitweise unterbrochen wird, bis die Trubstoffkonzentration unter einen zweiten Grenzwert fällt. Damit wird vermieden, dass die Filtermodule durch übermässige Trubstoffkonzentrationen verstopft oder gar beschädigt werden.

Je nach Konzentration der Trubstoffe im Filtratraum sind also verschiedenen Betriebsmodi denkbar. Bei ausreichend geringer Konzentration kann nur die Crossflow-Mikrofiltration betrieben werden. Bei zu grossen Konzentrationen wird solange zentrifugiert, bis die Trubstoffkonzentration ausreichend gering ist.

In einem anderen Ausführungsbeispiel der Erfindung wird das Unfiltrat in Serie zum Filtermodul im Kreislauf durch die Zentrifuge geführt, zentrifugiert und im Kreislauf dem Filtermodul zugeführt. Die Zentrifuge kann dabei im Kreislauf vor oder nach dem Filtermodul angeordnet sein. Der Grad der Vorklärung in der Zentrifuge kann durch die Zentrifugenleistung ebenfalls eingestellt werden. Eine Bypassleitung ermöglicht den Betrieb der Zentrifuge zeitweise auszuschalten.

Es ist vorteilhaft, das Unfiltrat gleichzeitig im Kreislauf zu kühlen. Ausserdem kann das Unfiltrat vor dem Eintritt in das Filtermodul durch einen Vorfilter geführt werden. Der Vorfilter dient dem Schutz der eingesetzten Membranen und übernimmt keine eigentlichen Filtrationsfunktion. Der Vorfilter dient beispielsweise zum Zurückhalten von Glassplittern oder Metallspänen, welche die Membran zerstören können. Die Filterfläche des Vorfilters kann beispielsweise aus einem Metallgewebe gebildet werden. Das Filtrat kann ebenfalls gekühlt werden.

Die Zentrifuge dient zum Ausschleusen der Trubstoffe aus dem Unfiltratstrom, insbesondere auch aus dem Arbeitstank. Das Zentrifugen-Retentat wird in der Zentrifuge diskontinuierlich ausgeschleust. Die Ausschleusung kann erfolgen, sobald die Beladung des Trubraums in der Zentrifuge einen vorbestimmbaren Wert übersteigt.

Durch eine sinnvolle Einstellung der Parameter der Zentrifuge kann das Retentat in konzentrierter Form, d.h. mit minimalen Produkteresten ausgetragen werden. Die geklärte Flüssigkeit wird als Teilfiltrat in den Unfiltratstrom oder in den Arbeitstank gefördert.

Der in dem Retentat der Zentrifuge enthaltene Produktrest kann durch zumindest zeitweise Zugabe von Wasser zum Arbeitstank oder direkt in den Teilstrom vor der Zentrifuge weiter reduziert werden (Diafiltration). Das gleiche gilt für den Teilstrom T1: Durch Zugabe von Wasser, vorzugsweise am Ende des Filtrationszyklusses, wird das Getränk verdünnt und Produktreste als Filtrat gewonnen. Der Verlust an Getränk kann dadurch kleiner gehalten werden, als es dem Innenvolumen der Anlage entsprechen würde.

Während der Ausschleusung sind von der Zentrifuge verursachte Druck- und Durchflussschwankungen möglich. Diese werden durch den Arbeitstank aufgefangen.

Durch die von der Zentrifuge reduzierte Retentatmenge werden in der Crossflow-Mikrofiltrationsanlage höhere Filtratleistungen, insbesondere höhere Volumenströme bei sonst gleichen Parametern (Filterfläche, Überströmgeschwindigkeit, Druck) erzielt. Der Energieeintrag in der Anlage kann deshalb bezogen auf die filtrierte Menge reduziert werden.

Weil die Zentrifuge nicht die gesamte Unfiltratmenge klären muss, kann die Zentrifuge viel kleiner als bei bekannten Zentrifugen gewählt werden, die zur kompletten Klärung des Unfiltrats verwendet werden.

Dank der vorliegenden Erfindung wird ein sich selbst stabilisierender Betriebszustand erreicht, der bei automatischem Betrieb auf wechselnde Verhältnisse im zuströmenden Unfiltrat reagieren kann.

Die Erfindung wird im Folgenden anhand der Zeichnungen und in Ausführungsbeispielen näher erläutert. Es zeigen:
- Figur 1: eine schematische Darstellung eines ersten Ausführungsbeispiels der Erfindung und
- Figur 2: eine schematische Darstellung eines zweiten Ausführungsbeispiels der Erfindung.

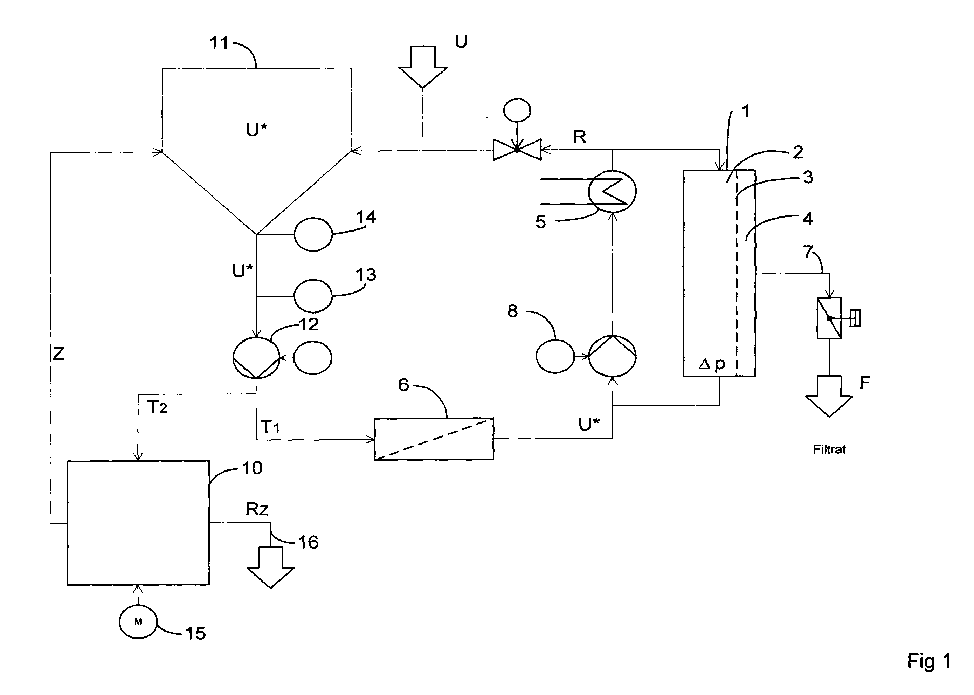

In Figur 1 ist ein erstes Ausführungsbeispiel der Erfindung gezeigt. Eine unfiltrierte Flüssigkeit wird in einem Arbeitstank 11 als Unfiltrat U gesammelt.

Zur Filtration wird die Flüssigkeit in einem Unfiltratstrom U* durch eine Mehrzahl von Filtermodulen 1 für die Crossflow-Mikrofiltration geführt. Die Membranmodule 1 sind in Figur 1 schematisch als Block dargestellt. In Wirklichkeit werden beispielsweise zwanzig Membranmodule des Typs Clarox XS der Anmelderin mit einer Gesamtfilterfläche von 186 m² eingesetzt. Teile dieser z.B. 20 Module werden parallel mit Unfiltrat U* angeströmt. Der Rest der Module wird in Serie zu je einem anderen Modul angeströmt.

Die Filtermodule 1 weisen eine poröse Membran 3 auf, welche eine Filtratseite 4 von einer Unfiltratseite 2 trennt.

Die unfiltrierte Füssigkeit wird in einem Unfiltratstrom U* über die Unfiltratseite 2 der Membran 3 geführt. Aufgrund eines sich einstellenden transmembranen Drucks AP bewegt sich ein Teil des Unfiltratstroms U* quer zur Strömungsrichtung durch die poröse Membran 3 und tritt geklärt auf der Filtratseite 4 als Filtrat F aus. In einem Filtrataustrag 7 kann das Filtrat F entfernt werden.

Die Filtermodule 1 sind in einem Kreislauf angeordnet und mit dem Arbeitstank verbunden. Der nichtgeklärte Rest des Unfiltratstroms, der aus den Filtermodulen 1 wieder austritt, wird als Retentat R mit neuer zu filtrierender Flüssigkeit U vermischt und dem Kreislauf wieder zugegeben, d.h. dem Arbeitstank 11 zugeführt.

Im Kreislauf sind ausserdem (fakultativ) ein Vorfilter 6 und ein Kühler 5 angeordnet. Der Vorfilter 6 dient zum Entfernen von Fremdstoffen wie Metallteilen, welche die Membranmodule 1 beschädigen könnten.

Die Vorrichtung weist ausserdem erfindungsgemäss eine Zentrifuge 10 auf. Die Zentrifuge 10 ist mit einem Motor 15 antreibbar. Eine Ausschleusöffnung 16 dient zum Entfernen des Retentates R_{z} der Zentrifuge.

Die zentrifugierte Flüssigkeit wird über eine Verbindungsleitung als Teilfiltrat Z dem Arbeitstank 11 und damit dem Kreislauf U* wieder zugeführt.

Erfindungsgemäss wird der Unfiltratstrom U* nach dem Austritt aus dem Arbeitstank 11 in zwei Teilströme T₁ und T₂ aufgeteilt. Der erste Teilstrom T₁ wird in den Kreislauf für die Crossflow-Mikrofiltration und damit durch die Filtermodule 1 geführt. Der zweite Teilstrom T₂ wird in die Zentrifuge 10 geführt und zentrifugiert. Das dabei erzeugte Teilfiltrat Z wird im Kreislauf zurück zum Arbeitstank 11 gebracht. Eine Pumpe und Ventilanordnung 12 ist vorgesehen, um den Unfiltratstrom U* in die beiden Teilströme T₁, T₂ aufzuteilen.

Ausserdem ist eine Messanordnung 13 zum Messen der Stoffkonzentration der Trübstoffe im Unfiltratstrom U* vorgesehen. Durch nicht gezeigte Steuermittel wird die Ventilanordung 12 zum Aufteilen des Unfiltratstroms U* in die zwei Teilströme T₁, T₂ in Abhängigkeit der Messanordnung 13 ermittelten Konzentrationswerte eingestellt. Solange die Stoffkonzentration im Unfiltrat U unterhalb einem vorbestimmbaren ersten Grenzwert bleibt, ist durch die Ventilanordnung 12 nur der Teilstrom T₁ eingeschaltet. Damit wird das ganze Unfiltrat durch die Filtermodule 1 geführt. Sobald der erste Grenzwert der Stoffkonzentration überschritten wird, wird ein Teil des Unfiltrats in den Teilstrom T₂ geleitet. Auf diese Weise wird durch Zentrifugation der Wert der Trubstoffkonzentration im Unfiltrat im ganzen System herabgesetzt. Die zentrifugierte Flüssigkeit wird als Teilfiltrat Z dem Unfiltrat U* im Arbeitstank 11 wieder zugeführt. Je höher die Konzentration der Trubstoffe im Unfiltrat U ist, umso grösser kann beispielsweise der Fluss des Unfiltrats im Teilstrom T₂ sein.

Wenn die Konzentration der Tubstoffe im Unfiltratraum einen zweiten vorbestimmbaren Grenzwert übersteigt, wird der Teilstrom T₁ ausgeschaltet, sodass durch die Zentrifuge 10 ein geschlossener Kreislauf entsteht. Die Flüssigkeit mit der erhöhten Trubstoffkonzentration wird solange zentrifugiert, bis der Konzentrationswert mit Abstand unter den zweiten Grenzwert fällt. Eine äquivalente Methode den Teilstrom T₁ gegebenenfalls auszuschalten, besteht darin, die Filtratabführung zeitweise zu sperren.

Aufgrund der Messung der Trubstoffkonzentrationswerte und der davon abhängigen Steuerung der beiden Teilströme T₁, T₂ ist ein störungsarmer Betrieb der Crossflow-Filtrationsanlage mit stark wechselnden Trubstoff-Konzentrationen im Unfiltrat U sowie im Unfiltratstrom U* möglich.

Das in der Zentrifuge 10 erzeugte Retentat R_{z} wird periodisch ausgetragen, sobald die Trubbeladung in der Zentrifuge 10 einen bestimmten Wert übersteigt. Der Austrag über die Ausschleusöffnung 16 erfolgt mit einem Retentat, welches eine sehr geringe Menge an noch verwertbarem Produkt noch enthält. Der grösste Teil wird als Filtrat F aus der Crossflow-Mikrofiltationsanordnung entfernt.

Im Arbeitstank 11 ist ausserdem eine Füllstandsmessanordnung 14 vorgesehen. Die Filtration wird eingestellt, sobald der Stand des Unfiltrats im Arbeitstank 11 unter einen bestimmten Wert sinkt.

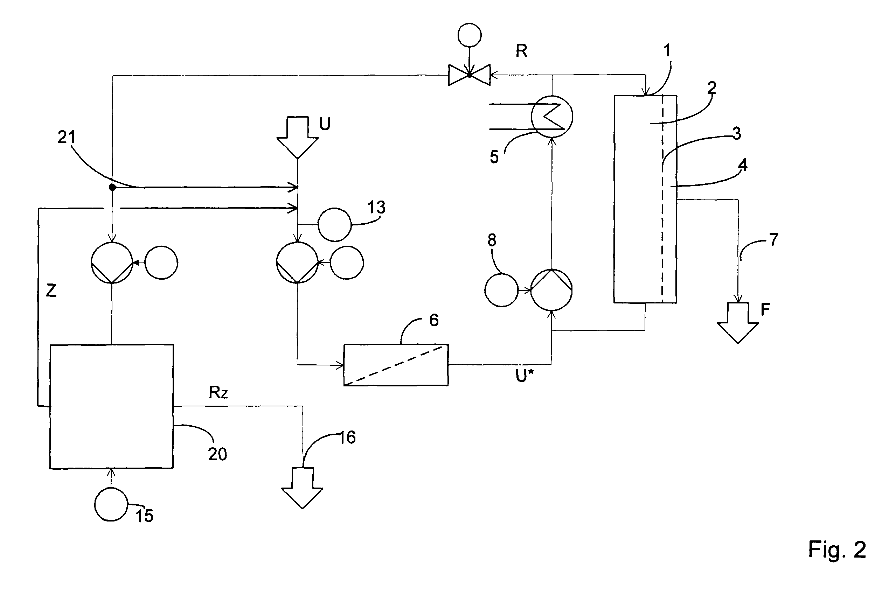

In Figur 2 ist ein alternatives Ausführungsbeispiel gezeigt. Im Ausführungsbeispiel gemäss Figur 2 wird auf einen Arbeitstank verzichtet. Die Zentrifuge 20 ist in Serie zum Kreislauf der Crossflow-Mikrofiltration geschaltet. Der bei Austritt aus den Filtermodulen 1 nicht filtrierte Rest des Unfiltrats wird als Retentat R in die Zentrifuge 20 geführt. Die zentrifugierte Flüssigkeit wird als Teilfiltrat Z mit neu zugeführtem Unfiltrat U vermischt und erneut durch die Filtermodule 1 geführt. Es kann die Konzentration der Trubstoffe festgelegt werden. Dazu ist ebenfalls ein Konzentrationsmesser 13 vorgesehen. Wird die Zentrifuge 20 zeitweise nicht benötigt, wird das Retentat R direkt über eine Bypassleitung 21 in den Kreislauf mit Unfiltrat U vermischt und erneut durch die Filtermodule 1 geführt.

Wird die Zentrifuge 20 zeitweise nicht benötigt, wird das Retentat R direkt über eine Bypassleitung 21 in den Kreislauf mit Unfiltrat U vermischt und erneut durch die Filtermodule 1 geführt.

Im übrigen entspricht die Filtrationsanordnung gemäss Figur 2 derjenigen aus Figur 1. Gleiche Bezugszeichen bezeichnen gleiche Komponenten.

## Patentansprüche

1. Verfahren zur Crossflow-Mikrofiltration von Getränken, insbesondere von Bier,
in welchem die Flüssigkeit in einem Unfiltratstrom (U*) durch wenigstens ein Filtermodul (1) geleitet wird, und dort auf einer Unfiltratseite (2) eine poröse Membran (3) überströmt,
wobei ein erster Teil der Flüssigkeit die Membran (3) quer durchströmt und auf der der Unfiltratseite (2) gegenüberliegenden Filtratseite (4) der Membran (3) als Filtrat (F) gesammelt wird,
und wobei der unfiltrierte Rest der Flüssigkeit als Retentat (R) im Kreislauf dem Unfiltratstrom (U*) zugeführt wird,
dadurch gekennzeichnet, dass wenigstens ein Teil des Unfiltratstroms (U*) wenigstens zeitweise im Kreislauf durch eine Zentrifuge (10; 20) geführt, zentrifugiert und dem Unfiltratstrom (U*) als Teilfiltrat (Z) wieder zugeführt wird.

2. Verfahren nach Anspruch 1, dadurch gekennzeichnet, dass der Unfiltratstrom (U*) vor dem Filtermodul (1) in einen ersten Teilstrom (T₁) und in einen zweiten Teilstrom (T₂) aufgetrennt wird, wobei der erste Teilstrom (T₁) im Kreislauf durch das Filtermodul (1) geführt wird und wobei der zweite Teilstrom (T₂) im Kreislauf durch die Zentrifuge (10) geführt wird.

3. Verfahren nach Anspruch 2, dadurch gekennzeichnet, dass das Unfiltrat (U) zuerst in einen Arbeitstank (11) geführt wird und dass das Retentat (R) und das Teilfiltrat (Z) in den Arbeitstank (11) geleitet werden.

4. Verfahren nach einem der Ansprüche 2 oder 3, dadurch gekennzeichnet, dass die Menge des Flusses des ersten Teilstroms (T₁) und des zweiten Teilstroms (T₂) in Abhängigkeit der Konzentration der Trubstoffe im Unfiltratstrom (U*) bzw. im Unfiltrat (U) eingestellt wird.

5. Verfahren nach Anspruch 4, dadurch gekennzeichnet, dass der zweite Teilstrom (T₂) eingeschaltet wird sobald der Wert der Konzentration der Trubstoffe einen vorbestimmbaren ersten Grenzwert übersteigt und/oder dass der erste Teilstrom (T₁) ausgeschaltet wird, sobald die Konzentration der Trubstoffe im Unfiltratstrom (U*) bzw. im Unfiltrat (U) einen zweiten vorbestimmbaren Grenzwert übersteigt.

6. Verfahren nach Anspruch 1, dadurch gekennzeichnet, dass der Unfiltratstrom (U*) in Serie zu der Crossflow-Mikrofiltration im Kreislauf durch eine Zentrifuge (20) geführt, zentrifugiert und wieder dem Filtermodul (1) zugeführt wird.

7. Verfahren nach einem der Ansprüche 1 bis 6, dadurch gekennzeichnet, dass der Unfiltratstrom (U*) bzw. der erste Teilstrom (T₁) im Kreislauf zu der Crossflow-Mikrofiltration wenigstens teilweise durch einen Kühler geführt wird.

8. Verfahren nach einem der Ansprüche 1 bis 7, dadurch gekennzeichnet, dass der Unfiltratstrom (U*) bzw. der erste Teilstrom (T₁) vor dem Eintritt in das Filtermodul (1) durch einen Vorfilter (6) geführt wird.

9. Verfahren nach einem der Ansprüche 1 bis 8, dadurch gekennzeichnet, dass die zentrifugierten Feststoffe in der Zentrifuge (10, 20) als Zentrifugenretentat (R_{z}) diskontinuierlich ausgeschleust werden, sobald die Beladung des Trubraums in der Zentrifuge (10, 20) einen vorbestimmbaren Wert übersteigt.

10. Vorrichtung zur Crossflow-Mikrofiltration eines Getränks, insbesondere von Bier, mit wenigstens einem Filtermodul (1) mit einer porösen Membrane (3) über welche auf einer Unfiltratseite (2) die Flüssigkeit in einem Unfiltratstrom (U*) führbar ist, wobei ein Teil der Flüssigkeit die Membran quer durchströmt und auf der der Unfiltratseite (2) gegenüberliegenden Filtratseite (4) der Membran (3) als Filtrat (F) entnehmbar ist,
dadurch gekennzeichnet, dass die Vorrichtung eine Zentrifuge (10, 20) aufweist, die derart mit dem Filtermodul verbunden ist, dass wenigstens ein Teil des Unfiltratstroms (U*) im Kreislauf durch die Zentrifuge (10, 20) führbar ist.

11. Vorrichtung nach Anspruch 10, dadurch gekennzeichnet, dass die Vorrichtung Mittel zum Aufteilen des Unfiltratstroms (U*) in zwei parallele Teilströmen (T₁, T₂) und zum Leiten der Teilströme (T₁, T₂) durch das Filtermodul (1) einerseits und durch die Zentrifuge (10) andererseits aufweist, wobei die Mittel derart ausgebildet sind, dass die parallelen Teilströme (T₁, T₂) nach dem Austritt aus dem Filtermodul (1) bzw. aus der Zentrifuge (10) wieder dem Unfiltratstrom (U*) zuführbar sind.

12. Vorrichtung nach Anspruch 11, dadurch gekennzeichnet, dass die Vorrichtung einen Arbeitstank (11) aufweist, in welchen die zu filtrierende Flüssigkeit einleitbar ist, und welcher mit dem Filtermodul (1) und der Zentrifuge (10) verbunden ist,
wobei ausserdem Mittel (12) zum Aufteilen des Unfiltratstroms (U*) in die Teilströme (T₁, T₂) nach Austritt aus dem Arbeitstank (11) vorgesehen sind.

13. Vorrichtung nach Anspruch 11 oder 12, dadurch gekennzeichnet, dass die Vorrichtung Mittel (12) zum Einstellen der Flussmenge der beiden Teilströme (T₁, T₂) aufweist.

14. Vorrichtung nach Anspruch 13, dadurch gekennzeichnet, dass die Vorrichtung Messmittel (13) zum Messen der Konzentration der Trubstoffe im Unfiltratstrom (U*), vorzugsweise im Arbeitstank (11) aufweist.

15. Vorrichtung nach Anspruch 10, dadurch gekennzeichnet, dass eine Zentrifuge (20) und das Filtermodul (11) in einem Kreislauf in Serie zueinander vorzugsweise mit einer Bypassleitung (21) angeordnet sind.

16. Vorrichtung nach einem der Ansprüche 10 bis 15, dadurch gekennzeichnet, dass die Vorrichtung einen Kühler (5) aufweist, durch welchen der Unfiltratstrom (U*) wenigstens teilweise führbar ist.

17. Vorrichtung nach einem der Ansprüche 10 bis 16, dadurch gekennzeichnet, dass die Vorrichtung einen Vorfilter (6) aufweist, der bezüglich der Strömungsrichtung vor dem Filtermodul (1) angeordnet ist.

18. Verfahren zur Crossflow-Mikrofiltration einer Getränke-Flüssigkeit, insbesondere von Bier, in welchem die Flüssigkeit in einem Unfiltratstrom (U*) durch wenigstens ein Filtermodul (1) geleitet wird und dort auf einer Unfiltratseite (2) eine poröse Membrane (3) überströmt,
wobei ein erster Teil der Flüssigkeit die Membran (3) quer durchströmt und auf der der Unfiltratseite (2) gegenüberliegenden Filtratseite (4) der Membran (3) als Filtrat (F) gesammelt wird und wobei der unfiltrierte Rest der Flüssigkeit als Retentat (R) im Kreislauf dem Unfiltratstrom (U*) zugeführt wird,
dadurch gekennzeichnet, dass die Konzentration der Trubstoffe im Unfiltratstrom (U*) unter einem vorbestimmbaren Grenzwert gehalten wird.
